# EUROPÄISCHE PATENTANMELDUNG

(11) **EP 3 505 598 A1**
(43) Veröffentlichungstag der Anmeldung: **03.07.2019**
(21) Anmeldenummer: 19152592.2
(22) Anmeldetag: 19.01.2015
(51) Int. Cl.: C09K 21/12, C08K 3/32, C08K 5/00, C08K 5/5313

(54) **HALOGENFREIE FESTE FLAMMSCHUTZMITTELMISCHUNG UND IHRE VERWENDUNG**

(30) Priorität: 29.01.2014 DE 102014001222
(62) Teilanmeldung aus: 15701669.2
(71) Anmelder: Clariant International Ltd, 4132 Muttenz (CH)
(72) Erfinder: BAUER, Harald, 50170 Kerpen (DE); HÖROLD, Sebastian, 86420 Diedorf (DE); SICKEN, Martin, 51149 Köln (DE)
(74) Vertreter: Jacobi, Carola

(57) **Zusammenfassung**

Die Erfindung betrifft Halogenfreie Flammschutzmittelmischung, enthaltend 1 bis 99 Gew.-% einer Komponente A und 1 bis 99 Gew.-% einer Komponente B, wobei Komponente A 92 bis 99,9 Gew.-% eines festen Aluminiumdiethylphosphinsäuresalz und 0,5 bis 8 Gew.-% nicht-brennbare Zusätze enthält wobei es sich bei den Zusätzen um Sulfate handelt, und dass es sich bei den Sulfaten um Verbindungen mit Kationen der Alkalimetalle, der Erdalkalimetalle, der dritten Hauptgruppe, der Nebengruppen des Periodensystems und/oder von protonierten Stickstoffbasen handelt; und es sich bei der Komponente B um Aluminiumphosphit handelt, wobei es sich bei den bei den Aluminiumphosphiten um solche der Formeln (I), (II) und/oder (III)

Al₂(HPO₃)₃ x (H₂O)_{q} (I)

in der

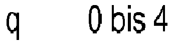

bedeutet,

Al_{2,00}M_{z}(HPO₃)_{y}(OH)ᵥ x (H₂O)_{w} (II)

in der

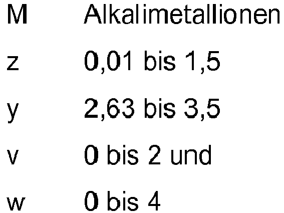

bedeutet,

Al_{2,00}(HPO₃)ᵤ(H₂PO₃)ₜ x (H₂O)ₛ (III)

in der

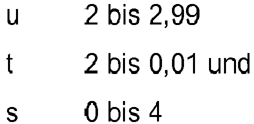

bedeutet,
und/oder um Mischungen von Aluminiumphosphit der Formel (I) mit schwerlöslichen Aluminiumsalzen und stickstofffreien Fremdionen, um Mischungen von Aluminiumphosphit der Formel (III) mit Aluminiumsalzen, um Aluminiumphosphit [Al(H2PO₃)₃], um sekundäres Aluminiumphosphit [Al₂(HPL₃)₃], um basisches Aluminiumphosphit [Al(OH)(H₂PO₃)₂*2aq], um Aluminiumphosphittetrahydrat [Al₂(HPO₃)₃*4aq], um Aluminiumphosphonat, um Al₇(HPO₃)₉(OH)₆(1,6-Hexandiamin)_{1,5}*12H₂O, um Al₂(HPO₃)³*xAl₂O₃*nH₂O mit x = 2,27 - 1, um Al₄H₆P₁₆O₁₈ und/oder um Mischungen von 0 - 99,9 Gew.-% Al₂(HPO₃)₃*nH₂O mit 0,1 - 100 Gew.-% Natriumaluminiumphosphit handelt.

## Beschreibung

Flammschutzmittelmischungen verschiedenster Art werden zur flammhemmenden Ausrüstung von Polymeren eingesetzt. Dabei ist es erforderlich, dass bei den für die Polymerherstellung typischen Verfahren die hinzuzufügenden Komponenten, auch die Flammschutzmittel, eine gute Fließfähigkeit und Rieselfähigkeit aufweisen, um gleichmäßig im Polymer verteilt werden zu können, damit dessen Eigenschaften nicht negativ beeinflusst werden.

Die Fließfähigkeit wird beeinflusst durch Korneigenschaften wie z. B. Korngröße, Korngrößenverteilung, Oberflächenbeschaffenheit der Körner, Wassergehalt bzw. Feuchte und unterschiedliche Kornformen. Je nach Korngröße oder Häufigkeit der unterschiedlich großen Partikel rollen diese unterschiedlich leicht aufeinander ab. Runde Partikel mit gleichmäßiger Oberfläche sollten leichter fließen als solche mit unregelmäßiger Gestalt. Je nach chemischer Oberfläche, Feuchte oder elektrostatischen Eigenschaften unterscheiden sich die Fließeigenschaften.

Werden Pulver mit schlechten Fließeigenschaften verarbeitet, erfolgt oft eine unregelmäßige Dosierung und damit eine ungleichmäßige Zusammensetzung und Verteilung im Polymer, so dass daraus eine von Formteil zu Formteil unzureichende Flammschutzwirkung resultiert.

Nach dem Stand der Technik kann die Fließfähigkeit durch Beimengungen von Trennmitteln und Fremdkörpern erhöht werden. Klein beschreibt als Lösung dieser Aufgabe in Seifen-Öle-Fette-Wachse 94 (1968), 849 den Zusatz von Calciumstearat und Aerosil in Mengen von 5.000 bis 10.000 ppm. Die hier zur Verbesserung der Rieselfähigkeit vorgeschlagenen silicathaltigen Hilfsmittel sind äußerst feinteilig. Sie können eingeatmet werden und stehen im Verdacht Lungenkrankheiten auszulösen.

Die WO 2003/035736A1 beschreibt Melamincyanurataggregate, die durch Bindemittel zusammengehalten werden. Die Aufgabe dort besteht in der Verbesserung der Gleichverteilung der Aggregate durch eine Verbesserung der Rieselfähigkeit. Dieser Begriff wird auch als Fließfähigkeit von Schüttgütern (Pulver, Agglomerate, Granulate, etc.) bezeichnet. Hier werden mit Zusatz von 1.000 ppm bis 10 Gew.-% organischem Hilfsstoff die entsprechenden Partikel von spezieller Größe zu größeren Aggregaten verklebt und damit die Rieselfähigkeit erhöht. Diese organischen Hilfsstoffe sind typischerweise organische Verbindungen, beispielsweise Polymere oder Copolymere basierend auf Vinylpyrrolidon, Vinylacetat und Vinylcaprolactam, Epoxiden, Urethanen, Acrylaten, Estern, Amiden, Stearaten, Olefinen, Cellulosederivaten oder Mischungen davon. Die vorgenannten Aggregate können u. a. dadurch hergestellt werden, dass die Partikel zuvor in einer wässrigen Aufschlämmung dispergiert werden und ein wasserlösliches Hilfsmittel zugefügt wird.

Die EP-1522551A1 beschreibt phosphorhaltige Flammschutzmittelagglomerate geringer Schüttdichte, die Aggregate und/oder Primärteilchen aus Phosphinsäuresalzen und/oder Diphosphinsäuresalzen und/oder deren Polymere enthalten und mit Hilfe eines Hilfsmittels zusammenhaften. Diese Agglomerate sind durch Sprühgranulierung zugänglich.

Um die Flammschutzmittelagglomerate so homogen wie möglich in einem Polymer zu verteilen wird ein besonders gutes Fließverhalten des Schüttgutes angestrebt. Dies gelingt durch den Einsatz des vorgenannten Flammschutzmittelagglomerats mit niedriger Schüttdichte und trotzdem geringer Staubneigung. Geringe Staubneigung ist wichtig, denn durch Staubneigung kann die Dosierung bei der Einarbeitung in Polymere in Extrudern ungleichmäßig sein und sich dadurch eine inhomogene Verteilung des Flammschutzmittels im Polymer ergeben. Dies kann wiederum wegen daraus folgender lokaler Unterdosierung nachteilig für die Flammschutzwirkung sein.

Die EP-1522551A1 befasst sich nur mit der Erhöhung der Rieselfähigkeit bzw. Fließfähigkeit, aber nicht mit der Verbesserung der Gleichmäßigkeit der Rieselfähigkeit.

JP-2003138264A1 und JP-2003138265A1 beschreiben eine gute Fließfähigkeit für halogenhaltige Flammschutzmittel durch Verwendung besonders großer Partikel (0,8 bis 2 mm).

In der JP-2005171206A1 werden Flammschutzmittelmischungen mit guter Rieselfähigkeit durch Kombination von feinteiligen basischen Metalloxidpartikeln mit plättchenförmigen, feinteiligen, faserförmigen feinteiligen bzw. amorphen feinteiligen anorganischen Partikeln und anorganischen Flammschutzmitteln erhalten.

Die WO-2010075087A1 beschreibt eine frei fließende Flammschutzmittelzusammensetzung aus einem flüssigen phosphorhaltigen Flammschutzmittel in dem Letzteres auf einem Träger absorbiert wird.

Flammgeschützte Polymerformmassen werden u. a. beispielsweise hergestellt, in dem die Flammschutzkomponenten über den Seiteneinzug eines Doppelschnecken-Extruders bei Temperaturen von 250 bis 310 °C in eine Polymerschmelze eingearbeitet werden. Glasfasern werden - falls notwendig - über einen zweiten Seiteneinzug zugegeben. Der entstandene homogenisierte Polymerstrang wird abgezogen, im Wasserbad gekühlt und anschließend granuliert.

Bei ungleichmäßiger Rieselfähigkeit der Flammschutzkomponenten kann es zeitlich zu Überfüllungen von Befülltrichtern oder Unterdosierungen bei unzureichendem Produktnachschub aus den Vorratsbunkern kommen. Beides sind unerwünschte Produktionsstörungen. Als Folge davon können Chemikalien in die Betriebsumgebung austreten. Es kann auch zu schwankenden Produktzusammensetzungen in den flammgeschützten Polymerformmassen kommen. Bei einer Unterdosierung bedeutet dies einen unzureichenden Flammschutz für die Polymerformmasse.

Der vorliegenden Erfindung liegt daher die Aufgabe zugrunde, eine Flammschutzmittelmischung mit gleichmäßiger Rieselfähigkeit zur Verfügung zu stellen.

Eine weitere Aufgabe der vorliegenden Erfindung ist die Verhinderung von Prozessstörungen bei der Herstellung von flammgeschützten Polymerformmassen.

Die erfindungsgemäßen Flammschutzmittelmischungen enthalten keine Bindemittel, die zu einer Zusammenhaftung der Pulverpartikel zu höheren Aggregaten führen. Die Bindemittel würden lediglich die Effektivität der Flammschutzmittel verringern, indem die Menge an Aktivsubstanz (das ist das Flammschutzmittel) durch ggf. brennbare Hilfsmittel vermindert wird.

Es ist weiterhin Aufgabe der Erfindung, auf den Einsatz von wasserlöslichen organischen Hilfsmitteln zur Verbesserung der Rieselfähigkeit zu verzichten, ebenso soll die Korngröße der Flammschutzpartikel nicht vergrößert werden.

Überraschenderweise wurde gefunden, dass die erfindungsgemäßen halogenfreie Flammschutzmittelmischungen eine gleichmäßige Rieselfähigkeit haben und gleichzeitig eine gute Flammschutzwirkung erzielen.

Die Erfindung betrifft daher eine halogenfreie Flammschutzmittelmischung, enthaltend 1 bis 99 Gew.-% einer Komponente A und 1 bis 99 Gew.-% einer Komponente B, wobei Komponente A 85 bis 99,995 Gew.-% eines festen Diethylphosphinsäuresalzes der Metalle Mg, Ca, Al, Sb, SN, Ge, Ti, Fe, Zr, Zn, Ce, Bi, Sr, Mn, Li, Na, K und/oder einer protonierten Stickstoffbase und 0,5 bis 8 Gew.-% nicht-brennbare Zusätze enthält wobei es sich bei den Zusätzen um Sulfate handelt, und dass es sich bei den Sulfaten um Verbindungen mit Kationen der Alkalimetalle, der Erdalkalimetalle, der dritten Hauptgruppe, der Nebengruppen des Periodensystems und/oder von protonierten Stickstoffbasen handelt; und es sich bei der Komponente B um Aluminiumphosphit handelt;

und es sich bei der Komponente B um Aluminiumphosphit handelt, wobei es sich bei den Aluminiumphosphiten um solche der Formeln (I), (II) und/oder (III)

Al₂(HPO₃)₃ x (H₂O)_{q} (I)

in der
- q: 0 bis 4
bedeutet,

Al_{2,00}M_{z}(HPO₃)_{y}(OH)ᵥ x (H₂O)_{w} (II)

in der
- M: Alkalimetallionen
- z: 0,01 bis 1,5
- y: 2,63 bis 3,5
- v: 0 bis 2 und
- w: 0 bis 4
bedeutet,

Al_{2,00}(HPO₃)ᵤ(H₂PO₃)ₜ x (H₂O)ₛ (III)

in der
- u: 2 bis 2,99
- t: 2 bis 0,01 und
- s: 0 bis 4
bedeutet,
und/oder um Mischungen von Aluminiumphosphit der Formel (I) mit schwerlöslichen Aluminiumsalzen und stickstofffreien Fremdionen, um Mischungen von Aluminiumphosphit der Formel (III) mit Aluminiumsalzen, um Aluminiumphosphit [Al(H2PO₃)₃], um sekundäres Aluminiumphosphit [Al₂(HPO₃)₃], um basisches Aluminiumphosphit [Al(OH)(H₂PO₃)₂*2aq], um Aluminiumphosphittetrahydrat [Al₂(HPO₃)₃*4aq], um Aluminiumphosphonat, um Al₇(HPO₃)₉(OH)₆(1,6-Hexandiamin)_{1,5}*12H₂O, um Al₂(HPO₃)³*xAl₂O₃*nH₂O mit x = 2,27 - 1, um Al₄H₆P₁₆O₁₈ und/oder um Mischungen von 0 - 99,9 Gew.-% Al₂(HPO₃)₃*nH₂O mit 0,1 - 100 Gew.-% Natriumaluminiumphosphit handelt.

Besonders bevorzugt enthält die halogenfreie Flammschutzmittelmischung 20 bis 80 Gew.-% der Komponente A und 20 bis 80 Gew.-% der Komponente B.

Bevorzugt handelt es sich bei den Sulfaten um Natriumsulfate, Natriumaluminiumsulfate, Alunite, Aluminumsulfate, Calciumsulfat, Cersulfate, Eisensulfate, Kaliumhydrogensulfate, Kaliumsulfat, Magnesiumsulfate, Mangansulfate, Monolithiumsulfat, Titansulfate, Zinksulfat, Zinnsulfate, Zirconiumsulfate und/oder ihre Hydrate.

Bevorzugt handelt es sich bei den Aluminiumphosphit um eine Mischung von 50 - 99 Gew.-% Al₂(HPO₃)₃ x (H₂O)_{q} in der q 0 bis 4 bedeutet und 1 - 50 Gew.-% Natriumaluminiumphosphit.

Bevorzugt handelt es sich bei den Aluminiumphosphit auch um eine Mischung von 50 - 99 Gew.-% Al₂(HPO₃)₃ x (H₂O)_{q} in der q 0 bis 4 bedeutet und 1 - 50 Gew.-% Al_{2,00}M_{z}(HPO₃)_{y}(OH)ᵥ x (H₂O)_{w} (II) in der M Natrium, z 0,005 bis 0,15, y 2,8 bis 3,1, v 0 bis 0,4 und w 0 bis 4 bedeutet.

Bevorzugt weist in der halogenfreien Flammschutzmittelmischung die Komponente A eine mittlere Teilchengröße d50 von 0,05 bis 10µm und die Komponente B eine mittlere Teilchengröße d50 von 0,05 bis 10µm sowie eine Restfeuchte von 0,05 bis 8 Gew.-% auf.

Die Erfindung betrifft auch ein Verfahren zur Herstellung einer halogenfreien Flammschutzmittelmischung nach einem oder mehreren der Ansprüche 1 bis 6, dadurch gekennzeichnet, dass man die Komponenten A und B in Pulverform miteinander mischt und gegebenenfalls siebt.

Die Erfindung betrifft weiterhin ein Verfahren zur Herstellung der halogenfreien Flammschutzmittelmischung dadurch gekennzeichnet, dass man ein Diethylphosphinsäuresalz der Metalle Mg, Ca, Al, Sb, SN, Ge, Ti, Fe, Zr, Zn, Ce, Bi, Sr, Mn, Li, Na, K und/oder einer protonierten Stickstoffbase mit nicht-brennbaren Zusätzen und der Komponente B in Pulverform miteinander mischt.

Die Erfindung betrifft ebenfalls die Verwendung einer halogenfreien Flammschutzmittelmischung nach einem oder mehreren der Ansprüche 1 bis 6 als Zwischenprodukt für weitere Synthesen, als Binder, als Vernetzer bzw. Beschleuniger beim Aushärten von Epoxyharzen, Polyurethanen, ungesättigten Polyesterharzen, als Polymerstabilisatoren, als Pflanzenschutzmittel, als Sequestrierungsmittel, als Mineralöl-Additiv, als Korrosionsschutzmittel, in Wasch- und Reinigungsmittelanwendungen, in Elektronikanwendungen.

Bevorzugt ist die Verwendung einer halogenfreien Flammschutzmittelmischung nach einem oder mehreren der Ansprüche 1 bis 6 in oder als Flammschutzmittel, als Flammschutzmittel für Klarlacke und Intumeszenzbeschichtungen, in oder als Flammschutzmittel für Holz und andere cellulosehaltige Produkte, in oder als reaktive und/oder nicht reaktive Flammschutzmittel für Polymere, zur Herstellung von flammgeschützten Polymerformmassen, zur Herstellung von flammgeschützten Polymerformkörpern und/oder zum flammhemmend Ausrüsten von Polyester und Cellulose-Rein- und Mischgeweben durch Imprägnierung und/oder als Synergist und/oder als Synergist in weiteren Flammschutzmittel-Mischungen.

Die Erfindung betrifft auch flammgeschützte thermoplastische oder duroplastische Polymerformmassen, Polymer-Formkörper, -Filme, -Fäden und/oder -Fasern, enthaltend 0,1 bis 45 Gew.-% halogenfreie Flammschutzmittelmischung nach einem oder mehreren der Ansprüche 1 bis 6, 55 bis 99,9 Gew.-% thermoplastisches oder duroplastisches Polymer oder Mischungen derselben, 0 bis 55 Gew.-% Additive und 0 bis 55 Gew.-% Füllstoff bzw. Verstärkungsmaterialien, wobei die Summe der Komponenten 100 Gew.-% beträgt.

Bevorzugt sind dabei flammgeschützte thermoplastische oder duroplastische Polymerformmassen, Polymer-Formkörper, -Filme, -Fäden und/oder -Fasern, enthaltend 1 bis 30 Gew.-% halogenfreie Flammschutzmittelmischung nach einem oder mehreren der Ansprüche 1 bis 6, 10 bis 97 Gew.-% thermoplastisches oder duroplastisches Polymer oder Mischungen derselben, 1 bis 30 Gew.-% Additive und 1 bis 30 Gew.-% Füllstoff bzw. Verstärkungsmaterialien, wobei die Summe der Komponenten 100 Gew.-% beträgt.

Die Erfindung betrifft weiterhin flammgeschützte thermoplastische oder duroplastische Polymerformmassen, Polymer-Formkörper, -Filme, -Fäden und/oder -Fasern, enthaltend eine halogenfreie Flammschutzmittelmischung nach einem oder mehreren der Ansprüche 1 bis 6, dadurch gekennzeichnet, dass es sich bei dem Polymer um thermoplastische Polymere der Art Polystyrol-HI (High-Impact), Polyphenylenether, Polyamide, Polyester, Polycarbonate und Blends oder Polymerblends vom Typ ABS (Acrylnitril-Butadien-Styrol) oder PC/ABS (Polycarbonat/ Acrylnitril-Butadien-Styrol) oder PPE/HIPS (Polyphenylenether/Polystyrol-HI) Kunststoffe und/oder um duroplastische Polymere der Art ungesättigter Polyester oder Epoxidharze handelt.

Besonders bevorzugt handelt es sich bei dem Polymer um Polyamid 4/6 (Poly(tetramethylen-adipamid), Poly-(tetramethylen-adipinsäurediamid), um Polyamid 6 (Polycaprolactam, Poly-6-aminohexansäure), um Polyamid 6/6 ((Poly(N,N'-hexamethyleneadipinediamid) und/oder um HTN (Hochtemperatur-Nylon).

Besonders bevorzugt enthält die Komponente A, 99,1 bis 99,95 Gew.-% festes Aluminiumdiethylphosphinat und 0,05 bis 0,9 Gew.-% nicht-brennbare Zusätze.

Nachfolgend umfasst der Begriff Diethylphosphinsäuresalz immer ein Diethylphosphinsäuresalz der Metalle Mg, Ca, Al, Sb, SN, Ge, Ti, Fe, Zr, Zn, Ce, Bi, Sr, Mn, Li, Na, K und/oder einer protonierten Stickstoffbase.

Besonders bevorzugt ist eine halogenfreie Flammschutzmittelmischung, enthaltend 1 bis 99 Gew.-% einer Komponente A und 1 bis 99 Gew.-% einer Komponente B, wobei Komponente A 92 bis 99,9 Gew.-% eines Diethylphosphinsäuresalzes der vorgenannten Metalle und 0,1 bis 8 Gew.-% nicht-brennbare Zusätze enthält und es sich bei der Komponente B um Aluminiumphosphit handelt.

Bevorzugt Sulfate sind solche mit Kationen der Alkalimetalle sowie mit Kationen von protonierten Stickstoffbasen z. B. von Ammoniak, primären, sekundären, tertiären und quartären Aminen sowie mit Kationen der Erdalkalimetalle; mit Kationen der Elemente der dritten Hauptgruppe; mit Kationen der Nebengruppenelemente. Besonders bevorzugte Nebengruppenelemente sind dabei Titan, Eisen, Zink und Mischungen davon.

Bevorzugte Sulfate sind solche mit Kationen der Metalle Mg, Ca, Al, Sb, Sn, Ge, Ti, Fe, Zr, Zn, Ce, Bi, Sr, Mn, Li, Na, K und/oder einer protonierten Stickstoffbase.

Besonders bevorzugte Sulfate sind Natriumsulfat, Natriumaluminiumsulfat und Alunit.

Weiterhin bevorzugte Sulfate sind:
Aluminiumsulfat, Calciumsulfat, Cer(II)sulfat, Cer(IV)sulfat, Cersulfat, Eisen(II)sulfat, Eisen(III)sulfat, Eisensulfat, Kaliumsulfat, Kaliumhydrogensulfat, Magnesiumsulfat, Magnesiumsulfat, Mangan(II)sulfat, Mangan(III)sulfat, Mangan(IV)sulfat, Mangansulfat, Monolithiumsulfat, Natriumsulfat, Natriumsulfat, Titan(II)sulfat, Titan(III)sulfat, Titan(IV)sulfat, Titansulfat, Zinksulfat, Zinn(II)sulfat, Zinn(III)sulfat, Zinn(IV)sulfat, Zinnsulfat, Zirconium(II)sulfat, Zirconium(IV)sulfat, Zirconiumsulfat.

Bevorzugte Alunite sind:
Aluminite (Al₂(OH)₄(SO₄)·7H₂O), Metabasaluminite (Al₄(OH)₁₀(SO₄)), Metaaluminite (Al₂(OH)₄(SO₄)·5H₂O), Rostite (Al(OH)(SO₄)·5H₂O), Zaherite (Al₁₂O₁₃(SO₄)₅·xH₂O), Aluminumhydroxidoxidsulfat (Al₃₀(OH)₅₆O₈(SO₄)₉), Aluminumhydroxidoxidsulfathydrat, Aluminumhydroxidsulfat (Al(OH)_{2.24}(SO₄)_{0.38}), Aluminum hydroxidoxidsulfathydrat, Aluminumhydroxidsulfat (Al₃(OH)₅(SO₄)₂), Aluminumydroxidoxidsulfatnonahydrat, Aluminumhydroxidsulfat (Al₄(OH)₁₀(SO₄)), Aluminumhydroxidoxidsulfathydrat, Rostite (Al(OH)(SO₄)·5H₂O), Aluminumhydroxidsulfat (Al₇(OH)₁₇(SO₄)₂), Aluminumhydroxidsulfatdodecahydrate, Paraluminit (Al₄(OH)₁₀(SO₄)·10H₂O), Metaaluminite (Al₂(OH)₄(SO₄)·5H₂O), Felsobanyite (Al₄(OH)₁₀(SO₄)·5H₂O), Aluminite (Al₂(OH)₄(SO₄)·7H₂O), Aluminumhydroxidsulfat (Al₃(OH)₇(SO₄)), Aluminumhydroxidsulfathydrate, Aluminumhydroxidsulfat (Al₃(OH)₅(SO₄)₂), Aluminumhydroxidsulfatdihydrat, Aluminumhydroxidsulfat (Al(OH)₂·7(SO₄)_{0.15}), Aluminumhydroxidsulfathydrat, Aluminumhydroxidsulfat (Al₇(OH)₁₇(SO₄)₂), Aluminumhydroxidsulfathydrat, Aluminumhydroxidsulfat (Al(OH)(SO₄)), Aluminumhydroxidsulfathydrat, Aluminumhydroxidsulfat (Al₄(OH)₁₀(SO₄)), Aluminumhydroxidsulfatdecahydrat, Jurbanite (Al(OH)(SO₄)·5H₂O), Aluminumhydroxidsulfat (Al₄(OH)₁₀(SO₄)), Aluminumhydroxidsulfatpentahydrat, Aluminumhydroxidsulfat (Al₆(OH)₁₆(SO₄)), Aluminumhydroxidsulfathydrat, Basaluminit (Al₄(OH)₁₀(SO₄)·5H₂O), Aluminumhydroxidsulfat (Al(OH)(SO₄)), Aluminumhydroxidsulfatpentahydrat, Minamiit (Na,Ca)₁₋ₓAl₃(SO₄)₂(OH)₆, Aluminiumsulfathydratoxid Al₆O₅(SO₄)₄*xH₂O, Zaherit-16A Al₁₂(SO₄)₅(OH)₂₆, Aluminiumsulfathydroxid Al₄SO₄(OH)₁₀, Zaherit-18A Al₁₂(SO₄)₅(OH)₂₆*20H₂O, Hydrobasaluminit Al₄SO₄(OH)₁₀*36H₂O, Aluminiumsulfathydroxidhydrat Al₃(SO₄)₂(OH)₅*9H₂O, Basaluminit/Felsobanyait Al₄SO₄(OH)₁₀*4H₂O, Aluminit Al₂(SO₄)(OH)₄*7H₂O, syn-Winebergit Al₄SO₄(OH)₁₀*7H₂O, Felsobanyait Al₄SO₄(OH)₁₀*5H₂O, syn-Metaaluminit Al₄SO₄(OH)₄*5H₂O, Rostit Al₄SO₄(OH)*5H₂O, Aluminiumsulfathydroxidhydrat 3 Al₂O₃ * 4 SO₃ * H₂O, Natroalunit NaAl₃(SO₄)₂(OH)₆.

Bevorzugte erfindungsgemäße halogenfreie Flammschutzmittelmischungen, die Sulfat als nicht-brennbaren Zusatz enthalten sind:
I) Halogenfreie Flammschutzmittelmischung, enthaltend 1 bis 99 Gew.-% einer Komponente A und 1 bis 99 Gew.-% Aluminiumphosphit, wobei Komponente A 95 bis 99,995 Gew.-% Diethylphosphinsäuresalz und 0,005 bis 5 Gew.-% Sulfat enthält.
II) Halogenfreie Flammschutzmittelmischung, enthaltend 10 bis 90 Gew.-% einer Komponente A und 10 bis 90 Gew.-% Aluminiumphosphit, wobei Komponente A 95 bis 99,995 Gew.-% Diethylphosphinsäuresalz und 0,005 bis 5 Gew.-% Sulfat enthält.
III) Halogenfreie Flammschutzmittelmischung, enthaltend 20 bis 80 Gew.-% einer Komponente A und 20 bis 80 Gew.-% Aluminiumphosphit, wobei Komponente A 95 bis 99,995 Gew.-% Diethylphosphinsäuresalz und 0,005 bis 5 Gew.-% Sulfat enthält.
IV) Halogenfreie Flammschutzmittelmischung, enthaltend 1 bis 99 Gew.-% einer Komponente A und 1 bis 99 Gew.-% Aluminiumphosphit, wobei Komponente A 99,1 bis 99,99 Gew.-% Diethylphosphinsäuresalz und 0,01 bis 0,9 Gew.-% Sulfat enthält.

Insgesamt sind also halogenfreie Flammschutzmittelmischungen bevorzugt, die 1 bis 99 Gew.-% einer Komponente A und 1 bis 99 Gew.-% einer Komponente B enthalten, wobei Komponente A 95 bis 99,995 Gew.-% eines Diethylphosphinsäuresalzes der und 0,005 bis 5 Gew.-% Sulfate enthält und es sich bei der Komponente B um Aluminiumphosphit handelt.

Unter den Begriff Aluminiumphosphit im Sinne der Erfindung fallen eine Reihe von Verbindungen, wie sie nachfolgend definiert sind.

Zu den erfindungsgemäßen Aluminiumphosphiten gehört ein Alkali-Aluminium-Mischphosphit der Formel

Al_{2,00}M_{z}(HPO₃)_{y}(OH)ᵥ * (H₂O)_{w} (II)

in der
- M: Alkalimetallionen,
- z: 0,01 bis 1,5,
- y: 2,63 bis 3,5,
- v: 0 bis 2 und w 0 bis 4,
bedeutet,

Ein solches erfindungsgemäßes Aluminiumphosphit ist u. a. ein Gemisch von Al₂(HPO₃)₃*nH₂O (mit n = 0 - 4) und Natriumaluminiumphosphit. Das Natriumaluminiumphosphit entspricht dabei der Formel (II), so z. B. der Summenformel Al_{2,0}Na_{0,6}(HPO₃)_{2,89}*0,28H₂O.

Die Röntgenpulverdaten von Natriumaluminiumphosphit sind in Beispiel 78 angegeben und die Röntgenpulverdaten von Al₂(HPO₃)₃*4H₂O zum Vergleich in Beispiel 82.

Erfindungsgemäßes Aluminiumphosphit ist auch ein Gemisch von 0 - 99,9 Gew.-% Al₂(HPO₃)₃*nH₂O und 0,1 - 100 Gew.-% Natriumaluminiumphosphit.

Ein bevorzugtes erfindungsgemäßes Aluminiumphosphit ist ein Gemisch von 1 - 50 Gew.-% Al₂(HPO₃)₃*nH₂O und 1 - 50 Gew.-% Natriumaluminiumphosphit.

Ganz besonders bevorzugt ist ein erfindungsgemäßes Aluminiumphosphit aus einem Gemisch von 5 - 75 Gew.-% Al₂(HPO₃)₃*nH₂O und 5 - 25 Gew.-% Natriumaluminiumphosphit.

Ein erfindungsgemäß einsetzbares Aluminiumphosphit ist auch ein Alkali-Aluminium-Mischphosphit nach der Formel

AlₓM_{z}(HPO₃)_{y}(OH)ᵥ*(H₂O)_{w} (II)

in der
- x: 1,00 bis 2,0,
- M: Alkalimetallionen,
- z: 0,01 bis 2,7,
- y: 2,63 bis 3,5,
- v: 0 bis 2 und w 0 bis 6 bedeutet,

Ein erfindungsgemäßes einsetzbares Aluminiumphosphit ist aber auch ein Gemisch folgender Zusammensetzung:
80 - 99,9 Gew.-% Al₂(HPO₃)₃
0,1 - 25 Gew.-% Wasser
0 - 10 Gew.-% Sulfat
0 - 15 Gew.-% Natrium
0 - 10 Gew.-% Phosphat

Ebenfalls erfindungsgemäß einsetzbar ist ein Aluminiumphosphit ist ein solches der folgenden Zusammensetzung:
80 - 99,9 Gew.-% Al₂(HPO₃)₃
0,1 - 25 Gew.-% Wasser
0 - 14,8 Gew.-% Natriumsulfat
0 - 7,4 Gew.-% Natriumphosphat

Zu den erfindungsgemäßen einsetzbaren Aluminiumphosphiten gehört auch das Aluminium-Hydrogenphosphit der Formel (III)

Al_{2,00}(HPO₃)ᵤ(H₂PO₃)ₜ * (H₂O)ₛ (III)

in der
- u: 2 bis 2,99,
- t: 2 bis 0,01 und
- s: 0 bis 4 bedeutet.

Erfindungsgemäß einsetzbares Aluminiumphosphit ist auch eine Mischung von Aluminiumphosphit mit schwerlöslichen Aluminiumsalzen und stickstofffreien Fremdionen, enthaltend 80 bis 99,898 Gew.-% Aluminiumphosphit der Formel (I)

Al₂(HPO₃)₃*H₂O (I)

worin
x 0 bis 4 bedeutet,
0,1 bis 10 Gew.-% schwerlösliche Aluminiumsalze und
0,002 bis 10 Gew.-% stickstofffreie Fremdionen.

Bevorzugt handelt es sich bei den schwerlöslichen Aluminiumsalzen um Aluminumhydroxid, Aluminiumhydroxychlorid, Polyaluminiumhydroxyverbindungen, Aluminiumcarbonate, Hydrotalcite (Mg₆Al₂(OH)₁₆CO₃ * nH₂O), Dihydroxyaluminiumnatriumcarbonat (NaAl(OH)₂CO₃), Aluminiumoxide, Aluminiumoxid-Hydrat, gemischte Aluminiumoxidhydroxide, basisches Alumiumsulfat und/oder Alunit.

Bevorzugt handelt es sich bei den stickstofffreien Fremdionen um Chloride, komplexe Chloride, Bromide; um Hydroxide, Peroxide, Peroxidhydrate, Sulfite, Sulfate, Sulfathydrate, saure Sulfate, Hydrogensulfate, Peroxosulfate, Peroxodisulfate; um Nitrate; um Carbonate, Percarbonate, Stannate; um Borate, Perborate, Perborathydrate; um Formiate, Acetate, Propionate, Lactate und/oder Ascorbate und/oder um Kationen der Elemente Li, Na, K, Mg, Ca, Ba, Pb, Sn, Cu, Zn, La, Ce, Ti, Zr, V, Cr, Mn, Fe, Co und/oder Ni.

Erfindungsgemäß einsetzbares Aluminiumphosphit ist weiterhin auch eine Mischung von Aluminium-Hydrogenphosphiten der Formel (III)

Al_{2,00}(HPO₃)ᵤ(H₂PO₃)ₜ * (H₂O)ₛ (III)

mit Aluminiumsalzen, enthaltend
91 bis 99,9 % Aluminium-Hydrogenphosphite der Formel (III)
0,1 bis 9 % Aluminiumsalze und
0 bis 50 % (Kristall-)Wasser
wobei in Formel (III)
- u: 2 bis 2,99,
- t: 2 bis 0,01 und
- s: 0 bis 4 bedeutet.

Zu den erfindungsgemäß einsetzbaren Aluminiumphosphiten gehören unter anderem Aluminiumphosphit (Al(H₂PO₃)₃), sekundäres Aluminiumphosphit, basisches Aluminiumphosphit (Al(OH)(H₂PO₃)₂*2aq), Aluminiumphosphittetrahydrat (Al₂(HPO₃)₃*4aq), Al₇(HPO₃)₉(OH)₆(1,6-Hexandiamin)_{1,5}*12H₂O, Al₂(HPO₃)₃*xAl₂O₃*nH₂O mit x = 2,27 - 1 und/oder Al₄H₆P₁₆O₁₈.

Bevorzugt beträgt die Restfeuchte der erfindungsgemäßen halogenfreien Flammschutzmittelmischung 0,01 bis 10 Gew.-%, insbesondere 0,1 bis 2 Gew.-%.

Bevorzugt beträgt die mittlere Teilchengröße d₅₀ der erfindungsgemäßen halogenfreien Flammschutzmittelmischung 0,1 bis 1.000 µm, insbesondere 10 bis 100 µm.

Bevorzugt beträgt die Schüttdichte der erfindungsgemäßen halogenfreien Flammschutzmittelmischung 80 bis 800 g/l, insbesondere 200 bis 700 g/l.

Die Rieselfähigkeit der erfindungsgemäßen halogenfreien Flammschutzmittelmischung wird nach Pfrengle (DIN ISO 4324 Tenside, Pulver und Granulate, Bestimmung des Schüttwinkels, Dez. 1983, Beuth Verlag Berlin) bestimmt.

Danach wird die vorgenannte Rieselfähigkeit durch die Ermittlung der Höhe des Kegels eines Pulvers oder Granulates beziehungsweise des Verhältnisses von Kegelradius zu Kegelhöhe bestimmt. Der Kegel wird erzeugt, indem eine spezielle Menge der zu untersuchenden Substanz in einer definierten Apparatur durch einen speziellen Trichter ausgeschüttet wird. Der definierte Kegelradius wird erzeugt, indem der Kegel aufgeschüttet wird, bis das Produkt über eine vom Untergrund erhabene kreisrunde Platte überfließt. Der Radius der Platte ist festgelegt. Der Trichter hat einen Innendurchmesser von 10 mm. Die Platte hat einen Radius von 50 mm. Es werden 5 Bestimmungen durchgeführt und gemittelt. Die Höhe wird in Millimeter mit einer Meßleiste von der Platte ausgehend, zum Scheitel des Kegels ausgemessen. Das Verhältnis von Kegelradius (50 mm) zu Kegelhöhe wird aus dem Mittelwert berechnet.

An einer halogenfreien Flammschutzmittelmischung nach dem Stand der Technik wurden Schüttkegelhöhen von 29,9 bis 49,9 mm entsprechend einer Spanne von 20 mm bestimmt und Verhältnisse von Radius zu Höhe (= cot alpha) von 1,67 bis 1,00 entsprechend einer Spanne von 0,67.

Die erfindungsgemäßen halogenfreien Flammschutzmittelmischungen können nach verschiedenen Methoden hergestellt werden.

Bevorzugt wird Aluminiumdiethylphosphinat direkt mit dem nicht-brennbaren Zusatz und Aluminiumphosphit gemischt.

Auch bevorzugt wird Aluminiumdiethylphosphinat enthaltend den nicht-brennbaren Zusatz mit Aluminiumphosphit gemischt.

Erfindungsgemäß wird das Aluminiumdiethylphosphinat, welches den nicht-brennbaren Zusatz enthält, hergestellt, in dem man Diethylphosphinsäure mit elementarem Metall oder einem Metallsalz 0,01 bis 1 Stunden bei 0 bis 300 °C umsetzt.

Bevorzugte Metallsalze sind dabei Metalloxide, gemischte Metall-Oxid-Hydroxide, Hydroxide etc.

In einer anderen erfindungsgemäßen Ausführungsform wird das den nicht-brennbaren Zusatz enthaltende Aluminiumdiethylphosphinat hergestellt, indem man eine Diethylphosphinsäure mit einer freien Base 0,01 bis 1 Stunden bei 0 bis 300 °C umsetzt.

In einer weiteren Ausführungsform wird das den nicht-brennbaren Zusatz enthaltende Aluminiumdiethylphosphinat hergestellt, indem man eine Diethylphosphinsäure in Form eines Alkalimetall-Salzes mit einem Salz des gewünschten Kations 0,01 bis 1 Stunden bei 0 bis 300 °C umsetzt.

Bevorzugte Alkalimetall-Salze sind Natrium- und Kaliumsalze.

Bevorzugte Salze, die die gewünschten Kationen liefern, sind dabei Acetate, Hydroxoacetate, Chloride, Hydroxochloride, Nitrate, Sulfate, Hydroxosulfate, Phosphonate und Phosphite. Bevorzugt ist deren Konzentration in wässriger Lösung 5 bis 95 % (wasserfreier Feststoff), besonders bevorzugt 20 bis 50 Gew.-%.

In einer anderen Ausführungsform wird das den nicht-brennbaren Zusatz enthaltende Aluminiumdiethylphosphinat hergestellt, indem man eine Diethylphosphinsäure in Form eines reaktiven Derivates mit einem Derivat des gewünschten Kations 0,01 bis 1 Stunden bei 0 bis 300 °C umsetzt. Bevorzugte Diethylphosphinsäurederivate sind Diethylphosphinsäureester, -pyroester, -chloride, -phosphate, -acetate, -phenolate etc.

In der Ausführungsform in der das Aluminiumdiethylphosphinat Sulfat als nicht-brennbaren Zusatz enthält, beträgt der Sulfatgehalt 50 ppm bis 5 Gew.-%, besonders bevorzugt 100 ppm bis 9000 ppm.

Die Erfindung umfasst auch flammgeschützte Polymerformmassen, enthaltend
1 bis 50 Gew.-% der erfindungsgemäßen halogenfreien Flammschutzmittelmischung
1 bis 99 Gew.-% Polymer oder Mischungen derselben,
0 bis 60 Gew.-% Additive und
0 bis 60 Gew.-% Füllstoff.

Die Erfindung umfasst bevorzugt flammgeschützte Polymerformmassen, enthaltend 5 bis 30 Gew.-% der erfindungsgemäßen halogenfreien Flammschutzmittelmischung,
15 bis 85 Gew.-% Polymer oder Mischungen derselben,
5 bis 40 Gew.-% Additive und
5 bis 40 Gew.-% Füllstoff.

Bevorzugt entstammen die Polymere aus der Gruppe der thermoplastischen Polymere wie Polyester, Polystyrol oder Polyamid und/oder der duroplastischen Polymere.

Bevorzugt handelt es sich bei den Polymeren um, um Polymere von Mono- und Diolefinen, beispielsweise Polypropylen, Polyisobutylen, Polybuten-1, Poly-4-methylpenten-1, Polyisopren oder Polybutadien sowie Polymerisate von Cycloolefinen wie z. B. von Cyclopenten oder Norbornen; ferner Polyethylen (das gegebenenfalls vernetzt sein kann), z. B. Polyethylen hoher Dichte (HDPE), Polyethylen hoher Dichte und hoher Molmasse (HDPE-HMW), Polyethylen hoher Dichte und ultrahoher Molmasse (HDPE-UHMW), Polyethylen mittlerer Dichte (MDPE), Polyethylen niederer Dichte (LDPE), lineares Polyethylen niederer Dichte (LLDPE), verzweigtes Polyethylen niederer Dichte (VLDPE), sowie Mischungen davon.

Bevorzugt handelt es sich bei den Polymeren um Copolymere von Mono- und Diolefinen untereinander oder mit anderen Vinylmonomeren, wie z. B. Ethylen-Propylen-Copolymere, lineares Polyethylen niederer Dichte (LLDPE) und Mischungen desselben mit Polyethylen niederer Dichte (LDPE), Propylen-Buten-1-Copolymere, Propylen-Isobutylen-Copolymere, Ethylen-Buten-1-Copolymere, Ethylen-Hexen-Copolymere, Ethylen-Methylpenten-Copolymere, Ethylen-Hepten-Copolymere, Ethylen-Octen-Copolymere, Propylen-Butadien-Copolymere, Isobutylen-Isopren-Copolymere, Ethylen-Alkylacrylat-Copolymere, Ethylen-Alkylmethacrylat-Copolymere, Ethylen-Vinylacetat-Copolymere und deren Copolymere mit Kohlenstoffmonoxid, oder Ethylen-Acrylsäure-Copolymere und deren Salze (lonomere), sowie Terpolymere von Ethylen mit Propylen und einem Dien, wie Hexadien, Dicyclopentadien oder Ethylidennorbornen; ferner Mischungen solcher Copolymere untereinander, z. B. Polypropylen/Ethylen-Propylen-Copolymere, LDPE/Ethylen-Vinylacetat-Copolymere, LDPE/Ethylen-Acrylsäure-Copolymere, LLDPE/Ethylen-Vinylacetat-Copolymere, LLDPE/Ethylen-Acrylsäure-Copolymere und alternierend oder statistisch aufgebaute Polyalkylen/Kohlenstoffmonoxid-Copolymere und deren Mischungen mit anderen Polymeren wie z. B. Polyamiden.

Bevorzugt handelt es sich bei den Polymeren um Kohlenwasserstoffharze (z. B. C₅-C₉) inklusive hydrierte Modifikationen davon (z. B. Klebrigmacherharze) und Mischungen von Polyalkylenen und Stärke.

Bevorzugt handelt es sich bei den Polymeren um Polystyrol (Polystyrol 143E (BASF), Poly-(p-methylstyrol), Poly-(alpha -methylstyrol).

Bevorzugt handelt es sich bei den Polymeren um Copolymere von Styrol oder alpha-Methylstyrol mit Dienen oder Acrylderivaten, wie z. B. Styrol-Butadien, Styrol-Acrylnitril, Styrol-Alkylmethacrylat, Styrol-Butadien-Alkylacrylat und -methacrylat, Styrol-Maleinsäureanhydrid, Styrol-Acrylnitril-Methylacrylat; Mischungen von hoher Schlagzähigkeit aus Styrol-Copolymeren und einem anderen Polymer, wie z. B. einem Polyacrylat, einem Dien-Polymeren oder einem Ethylen-Propylen-Dien-Terpolymeren; sowie Block-Copolymere des Styrols, wie z. B. Styrol-Butadien-Styrol, Styrol-Isopren-Styrol, Styrol-Ethylen/Butylen-Styrol oder Styrol-Ethylen/Propylen-Styrol.

Bevorzugt handelt es sich bei den Polymeren um Pfropfcopolymere von Styrol oder alpha-Methylstyrol, wie z. B. Styrol auf Polybutadien, Styrol auf Polybutadien-Styrol- oder Polybutadien-Acrylnitril-Copolymere, Styrol und Acrylnitril (bzw. Methacrylnitril) auf Polybutadien; Styrol, Acrylnitril und Methylmethacrylat auf Polybutadien; Styrol und Maleinsäureanhydrid auf Polybutadien; Styrol, Acrylnitril und Maleinsäureanhydrid oder Maleinsäureimid auf Polybutadien; Styrol und Maleinsäureimid auf Polybutadien, Styrol und Alkylacrylate bzw. Alkylmethacrylate auf Polybutadien, Styrol und Acrylnitril auf Ethylen-Propylen-Dien-Terpolymeren, Styrol und Acrylnitril auf Polyalkylacrylaten oder Polyalkylmethacrylaten, Styrol und Acrylnitril auf Acrylat-Butadien-Copolymeren, sowie deren Mischungen, wie sie z. B. als sogenannte ABS-, MBS-, ASA- oder AES-Polymere bekannt sind.

Bevorzugt handelt es sich bei den Polymeren um Halogenhaltige Polymere, wie z. B. Polychloropren, Chlorkautschuk, chloriertes und bromiertes Copolymer aus Isobutylen-Isopren (Halobutylkautschuk), chloriertes oder chlorsulfoniertes Polyethylen, Copolymere von Ethylen und chloriertem Ethylen, Epichlorhydrinhomo- und -copolymere, insbesondere Polymere aus halogenhaltigen Vinylverbindungen, wie z. B. Polyvinylchlorid, Polyvinylidenchlorid, Polyvinylfluorid, Polyvinylidenfluorid; sowie deren Copolymere, wie Vinylchlorid-Vinylidenchlorid, Vinylchlorid-Vinylacetat oder Vinylidenchlorid-Vinylacetat.

Bevorzugt handelt es sich bei den Polymeren um Polymere, die sich von alpha-, beta-ungesättigten Säuren und deren Derivaten ableiten, wie Polyacrylate und Polymethacrylate, mit Butylacrylat schlagzäh modifizierte Polymethylmethacrylate, Polyacrylamide und Polyacrylnitrile und Copolymere der genannten Monomeren untereinander oder mit anderen ungesättigten Monomeren, wie z. B. Acrylnitril-Butadien-Copolymere, Acrylnitril-Alkylacrylat-Copolymere, Acrylnitril-Alkoxyalkylacrylat-Copolymere, Acrylnitril-Vinylhalogenid-Copolymere oder Acrylnitril-Alkylmethacrylat-Butadien-Terpolymere.

Bevorzugt handelt es sich bei den Polymeren um Polymere, die sich von ungesättigten Alkoholen und Aminen bzw. deren Acylderivaten oder Acetalen ableiten, wie Polyvinylalkohol, Polyvinylacetat, -stearat, -benzoat, -maleat, Polyvinylbutyral, Polyallylphthalat, Polyallylmelamin; sowie deren Copolymere mit Olefinen.

Bevorzugt handelt es sich bei den Polymeren um Homo- und Copolymere von cyclischen Ethern, wie Polyalkylenglykole, Polyethylenoxyd, Polypropylenoxyd oder deren Copolymere mit Bisglycidylethern.

Bevorzugt handelt es sich bei den Polymeren um Polyacetale, wie Polyoxymethylen, sowie solche Polyoxymethylene, die Comonomere, wie z. B. Ethylenoxid, enthalten; Polyacetale, die mit thermoplastischen Polyurethanen, Acrylaten oder MBS modifiziert sind.

Bevorzugt handelt es sich bei den Polymeren um Polyphenylenoxide und -sulfide und deren Mischungen mit Styrolpolymeren oder Polyamiden.

Bevorzugt handelt es sich bei den Polymeren um Polyurethane, die sich von Polyethern, Polyestern und Polybutadienen mit endständigen Hydroxylgruppen einerseits und aliphatischen oder aromatischen Polyisocyanaten andererseits ableiten, sowie deren Vorprodukte.

Bevorzugt handelt es sich bei den Polymeren um Polyamide und Copolyamide, die sich von Diaminen und Dicarbonsäuren und/oder von Aminocarbonsäuren oder den entsprechenden Lactamen ableiten, wie Polyamid 2/12, Polyamid 4 (Poly-4-aminobuttersäure, Nylon® 4, Fa. DuPont), Polyamid 4/6 (Poly(tetramethylenadipamid), Poly-(tetramethylen-adipinsäurediamid), Nylon® 4/6, Fa. DuPont), Polyamid 6 (Polycaprolactam, Poly-6-aminohexansäure, Nylon® 6, Fa. DuPont, Akulon® K122, Fa. DSM; Zytel® 7301, Fa. DuPont; Durethan® B 29, Fa. Bayer), Polyamid 6/6 ((Poly(N,N'-hexamethyleneadipinediamid), Nylon® 6/6 , Fa. DuPont, Zytel® 101, Fa. DuPont; Durethan® A30, Durethan® AKV, Durethan® AM, Fa. Bayer; Ultramid® A3, Fa BASF), Polyamid 6/9 (Poly(hexamethylen nonanediamid), Nylon® 6/9 , Fa. DuPont), Polyamid 6/10 (Poly(hexamethylen sebacamid), Nylon® 6/10 , Fa. DuPont), Polyamid 6/12 (Poly(hexamethylene dodecanediamid), Nylon® 6/12 , Fa. DuPont), Polyamid 6/66 (Poly(hexamethylene adipamide-co-caprolactam), Nylon® 6/66 , Fa. DuPont), Polyamid 7 (Poly-7-aminoheptansäure, Nylon® 7, Fa. DuPont), Polyamid 7/7 (Polyheptamethylenpimelamid, Nylon® 7/7, Fa. DuPont), Polyamid 8 (Poly-8-aminooctansäure, Nylon® 8, Fa. DuPont), Polyamid 8/8 (Polyoctamethylensuberamid, Nylon® 8/8, Fa. DuPont), Polyamid 9 (Poly-9-aminononansäure, Nylon® 9, Fa. DuPont), Polyamid 9/9 (Polynonamethylenazelamid, Nylon® 9/9, Fa. DuPont), Polyamid 10 (Poly-10-aminodecansäure, Nylon® 10, Fa. DuPont), Polyamid 10/9 (Poly(decamethylenazelamid), Nylon® 10/9, Fa. DuPont), Polyamid 10/10 (Polydecamethylensebacamid, Nylon® 10/10, Fa. DuPont), Polyamid 11 (Poly-11-aminoundecansäure, Nylon® 11, Fa. DuPont), Polyamid 12 (Polylauryllactam , Nylon® 12 , Fa. DuPont, Grillamid® L20, Fa. Ems Chemie), aromatische Polyamide ausgehend von m-Xylol, Diamin und Adipinsäure; Polyamide, hergestellt aus Hexamethylendiamin und Iso- und/oder Terephthalsäure (Polyhexamethylenisophthalamid Polyhexamethylenterephthalamid) und gegebenenfalls einem Elastomer als Modifikator, z. B. Poly-2,4,4-trimethylhexamethylenterephthalamid oder Poly-m-phenylenisophthalamid. Blockcopolymere der vorstehend genannten Polyamide mit Polyolefinen, Olefin-Copolymeren, Ionomeren oder chemisch gebundenen oder gepfropften Elastomeren; oder mit Polyethern, wie z. B. mit Polyethylenglykol, Polypropylenglykol oder Polytetramethylenglykol. Ferner mit EPDM oder ABS modifizierte Polyamide oder Copolyamide; sowie während der Verarbeitung kondensierte Polyamide ("RIM-Polyamidsysteme").

Eingesetzt werden können auch aromatische Polyamide wie PA4T, PA6T, PA9T, PA10T, PA11T und/oder MXD6, amorphe Polyamide wie 6I/X und TPE-A "rigid" und "soft".

Bevorzugt handelt es sich bei den Polymeren auch um Polyharnstoffe, Polyimide, Polyamidimide, Polyetherimide, Polyesterimide, Polyhydantoine und Polybenzimidazole.

Bevorzugt handelt es sich bei den Polymeren um Polyester, die sich von Dicarbonsäuren und Dialkoholen und/oder von Hydroxycarbonsäuren oder den entsprechenden Lactonen ableiten, wie Polyethylenterephthalat, Polybutylenterephthalat (Celanex® 2500, Celanex® 2002, Fa Celanese; Ultradur®, FA. BASF), Poly-1,4-dimethylolcyclohexanterephthalat, Polyhydroxybenzoate, sowie Block-Polyetherester, die sich von Polyethern mit Hydroxylendgruppen ableiten; ferner mit Polycarbonaten oder MBS modifizierte Polyester.

Bevorzugt handelt es sich bei den Polymeren um Polycarbonate und Polyestercarbonate sowie um Polysulfone, Polyethersulfone und Polyetherketone.

Bevorzugt handelt es sich bei den Polymeren um vernetzte Polymere, die sich von Aldehyden einerseits und Phenolen, Harnstoff oder Melamin andererseits ableiten, wie Phenol-Formaldehyd-, Harnstoff-Formaldehyd- und Melamin-Formaldehydharze.

Bevorzugt handelt es sich bei den Polymeren um trocknende und nicht-trocknende Alkydharze.

Bevorzugt handelt es sich bei den Polymeren um ungesättigte Polyesterharze, die sich von Copolyestern gesättigter und ungesättigter Dicarbonsäuren mit mehrwertigen Alkoholen, sowie Vinylverbindungen als Vernetzungsmittel ableiten, wie auch deren halogenhaltige, schwerbrennbare Modifikationen.

Bevorzugt handelt es sich bei den Polymeren um vernetzbare Acrylharze, die sich von substituierten Acrylsäureestern ableiten, wie z. B. von Epoxyacrylaten, Urethanacrylaten oder Polyester-acrylaten.

Bevorzugt handelt es sich bei den Polymeren um Alkydharze, Polyesterharze und Acrylatharze, die mit Melaminharzen, Harnstoffharzen, Isocyanaten, Isocyanuraten, Polyisocyanaten oder Epoxidharzen vernetzt sind.

Bevorzugt handelt es sich bei den Polymeren um vernetzte Epoxidharze, die sich von aliphatischen, cycloaliphatischen, heterocyclischen oder aromatischen Glycidylverbindungen ableiten, z. B. Produkte von Bisphenol-A-diglycidylethern, Bisphenol-F-diglycidylethern, die mittels üblichen Härtern wie z. B. Anhydriden oder Aminen mit oder ohne Beschleunigern vernetzt werden.

Bevorzugt handelt es sich bei den Polymeren um Mischungen (Polyblends) der vorgenannten Polymeren, wie z. B. PP/EPDM, Polyamid/EPDM oder ABS, PVC/EVA, PVC/ABS, PVC/MBS, PC/ABS, PBTP/ABS, PC/ASA, PC/PBT, PVC/CPE, PVC/Acrylate, POM/thermoplastisches PUR, PC/thermoplastisches PUR, POM/Acrylat, POM/MBS, PPO/HIPS, PPO/PA 6.6 und Copolymere, PA/HDPE, PA/PP, PA/PPO, PBT/PC/ABS oder PBT/PET/PC.

Bevorzugte Additive für die erfindungsgemäßen halogenfreien Flammschutzmittelmischungen sind z. B. Synergisten.

Erfindungsgemäß werden als Synergisten Melaminphosphat, Dimelaminphosphat, Pentamelamintriphosphat, Trimelamindiphosphat, Tetrakismelamintriphosphat, Hexakismelaminpentaphosphat, Melamindiphosphat, Melamintetraphosphat, Melaminpyrophosphat, Melaminpolyphosphate, Melampolyphosphate, Melempolyphosphate und/oder Melonpolyphosphate bevorzugt.

Weiterhin sind als Synergisten Melaminkondensationsprodukte wie Melam, Melem und/oder Melon bevorzugt

Erfindungsgemäß sind als Synergisten weiterhin bevorzugt oligomere Ester des Tris(hydroxyethyl)isocyanurats mit aromatischen Polycarbonsäuren, Benzoguanamin, Tris(hydroxyethyl)isocyanurat, Allantoin, Glycouril, Melamin, Melamincyanurat, Harnstoffcyanurat, Dicyandiamid und/oder Guanidin.

Erfindungsgemäß sind als Synergisten weiterhin bevorzugt stickstoffhaltige Phosphate der Formeln (NH₄)_{y}H_{3-y}PO₄ bzw. (NH₄PO₃)_{z}, mit y gleich 1 bis 3 und z gleich 1 bis 10.000

Bevorzugte weitere Additive in den erfindungsgemäßen Flammschutzmittel-Zusammensetzungen sind Zinkverbindungen, z. B. Zinkoxid, Zinkhydroxid, Zinnoxidhydrat, Zinkcarbonat , Zinkstannat, Zinkhydroxystannat, basisches Zink-Silikat, Zinkphosphat, Zinkborat, Zinkmolybdat oder Zinksulfide.

Bevorzugte weitere Additive in den erfindungsgemäßen Flammschutzmittel-Zusammensetzungen sind solche aus der Gruppe der Carbodiimide und/oder (Poly-) isocyanate.

Bevorzugte weitere Additive kommen aus der Gruppe der sterisch gehinderten Phenole (z. B. Hostanox® OSP 1), sterisch gehinderten Amine und Lichtstabilisatoren (z. B. Chimasorb® 944, Hostavin®-Typen), Phosphonite und Antioxidantien (z. B. Sandostab® P-EPQ der Fa. Clariant) und Trennmittel (Licomont®-Typen der Fa. Clariant).

Bevorzugte weitere Füllstoffe sind in den erfindungsgemäßen Flammschutzmittel-Zusammensetzungen sind Sauerstoffverbindungen des Siliciums, Magnesiumverbindungen, z. B. Metallcarbonate von Metallen der zweiten Hauptgruppe des Periodensystems, Magnesiumoxid, Magnesiumhydroxid, Hydrotalcite, Dihydrotalcit, Magnesium-Carbonate oder Magnesium-Calcium-Carbonate, Calciumverbindungen, z. B. Calciumhydroxid, Calciumoxid, Hydrocalumit, Aluminiumverbindungen, z. B. Aluminiumoxid, Aluminiumhydroxid, Böhmit, Gibbsit oder Aluminiumphosphat, roter Phosphor, Zink- oder Aluminiumverbindungen; ebenso Glasfasern und Glaskugeln.

Erfindungsgemäß einsetzbare Compoundieraggregate sind Mehrzonenschnecken-Extruder mit Dreizonenschnecken und/oder Kurzkompressionsschnecken; auch Ko-Kneter z. B. von Fa. Coperion Buss Compounding Systems, CH-Pratteln, z. B. MDK/E46-11D und/oder Laborkneter (MDK 46 der Firma Buss, Schweiz mit L=11D).

Erfindungsgemäß einsetzbare Compoundieraggregate sind auch Doppelschneckenextruder, z. B. der Fa. Coperion Werner & Pfleiderer GmbH & Co.KG, Stuttgart (ZSK 25, ZSK30, ZSK 40, ZSK 58, ZSK MEGAcompounder 40, 50, 58, 70, 92, 119, 177, 250, 320, 350, 380) und/oder der Fa. Berstorff GmbH, Hannover, Leistritz Extrusionstechnik GmbH, Nürnberg.

Erfindungsgemäß einsetzbare Compoundieraggregate sind Ring-Extruder, z. B. der Fa. 3+Extruder GmbH, Laufen, mit einem Ring von drei bis zwölf kleinen Schnecken, die um einem statischen Kern rotieren und/oder Planetwalzenextruder, z. B. der Fa. Entex, Bochum und/oder Entgasungs-Extruder und/oder Kaskadenextruder und/oder Maillefer-Schecken.

Erfindungsgemäß einsetzbare Compoundieraggregate sind Compounder mit gegenläufiger Doppelschnecke z. B. Compex 37- bzw. -70-Typen der Fa. Krauss-Maffei Berstorff.

Erfindungsgemäße wirksame Schneckenlängen sind bei Einwellenextrudern bzw. Einschneckenextrudern 20 bis 40D.

Erfindungsgemäße wirksame Schneckenlängen (L) bei Mehrzonenschneckenextudern sind z. B. 25D mit Einzugzone (L=10D), Übergangszone (L=6D), Ausstoßzone (L=9D).

Erfindungsgemäß wirksame Schneckenlängen bei Doppelschneckenextrudern sind 8 bis 48D.

Herstellung, Verarbeitung und Prüfung von flammhemmenden Polymer-Formmassen und Kunststoff-Formkörpern.

Die Flammschutzmittelkomponenten werden mit dem Polymergranulat und evtl. Additiven vermischt und über den Seiteneinzug eines Doppelschnecken-Extruders (Typ Leistritz ZSE 27/44D) bei Temperaturen von 230 bis 260°C (glasfaserverstärktes PBT), 260 - 310 °C in PA 6.6 bzw. bei 250 - 275 °C in PA 6 eingearbeitet. Die Glasfasern wurden über einen zweiten Seiteneinzug zugegeben. Der homogenisierte Polymerstrang wurde abgezogen, im Wasserbad gekühlt und anschließend granuliert.

Nach ausreichender Trocknung wurden die Formmassen auf einer Spritzgießmaschine (Typ Arburg 320 C Allrounder) bei Massetemperaturen von 240 bis 300 °C zu Prüfkörpern verarbeitet und anhand des UL 94-Tests (Underwriter Laboratories) auf Flammwidrigkeit geprüft und klassifiziert.

Identifikation der Telomere und die Bestimmung von deren Gehalt:
Die ³¹P-NMR-Spektren werden mit einem Jeol JNM-ECS-400-Gerät gemessen, einem 400MHz NMR-Gerät von JEOL (Germany) GmbH. Eine Probe von 100 - 150 mg wird gelöst in 2 ml 10 Gew.-% NaOD/D₂O durch gelindes Erwärmen der Probe auf ca. 40 °C. Die Messung wird im {¹H}-Entkopplungsmodus mit 2048 scans durchgeführt.

Mit Hilfe der Tabelle 9 können die ³¹P-NMR-Signale der Telomere aus einem ³¹P-NMR-Spektrum entnommen werden. Die ³¹P-NMR-Integrationswerte ergeben den Prozentanteil von ³¹P-Kernen bezogen auf alle ³¹P-Kerne in der Probe. Diese Werte werden für jede Substanz mit einem individuellen Faktor (f=MG(Telomer als Al-Salz) dividiert durch 3* AG(Phosphor) multipliziert [MG: Molekulargewicht, AG: Atomgewicht]. Alle solche Werte plus der Wert für das Diethylphosphinatsalz werden summiert und so eine Zwischensumme ermittelt. Die Werte für jedes Isomer mit 100 multipliziert und durch die Zwischensumme dividiert ergibt den Telomerengehalt in Gew.-%.

Die Zuordnung der chemischen Strukturen der Telomere zu den ³¹P-NMR-Signalen kann durch Kombination der ³¹P-NMRs und a) der Intensitäten der Signale mit LC/MS geschehen (Kombination von Liquid chromatography und Massenspektroskopie-Analyse), b) durch gezielte Synthese der Telomere und Aufstocken der ³¹P-Proben mit so erhaltenen Referenzmaterialien oder c) durch Kombination von ³¹P-NMR und ¹³C-NMR-Spektroskopie.

Diethylphosphinat mit Molmasse 122 g/mol ist der intensivste Peak im LC-MS und auch im ³¹P-NMR. Die Molmasse 122 lässt nur die Struktur Diethylphosphinat zu, die gefundene ³¹P-NMR-chemische Verschiebung ist in Tabelle 9 aufgelistet. n-Butylethylphosphinat und sec-Butylethylphosphinat haben im LC-MS die Molmasse 150 g/mol. Diese Molmasse lässt nur die Struktur "n-Butylethylphosphinat" und "sec-Butylethylphosphinat" zu. n-Butyl ist in LC/MS und in ³¹P-NMR intensiver als sec-Butyl. Folglich ist das intensivere Signal (rechts von Diethyl) das n-Butylethylphosphinat, das weniger intensivere Signal (links von Diethyl) das sec-Butylethylphosphinat. Die gefundenen Signallagen sind in Tabelle 9 aufgelistet.

Aluminiumtri(n-butylethylphosphinat) lässt sich chemisch in mehreren Schritten durch Butylgruppenaddition an hypophosphorige Säure, darauf folgender Ethylgruppenanlagerung, Bildung des Butylethylphosphinsäure-Na-Salz mit Natronlauge und Umsetzung mit Al-Sulfat-Lösung in H₂O. Das Produkt kann zum Identifizieren von n-Butylethylphosphinat in unbekannten Proben durch Aufstocken verwendet werden. Die Identität der Alkylgruppen wird also eindeutig durch die Wahl der Rohstoffe vorgegeben.
sec-Butylethylphosphinat kann durch Aufnahme eines ¹³C-NMR und eines DEPT-135-Spektrum identifiziert werden. "DEPT" steht für Distortionless Enhancement by Polarization Transfer. Es ist eine hilfreiche Methode um zwischen CH, CH₂ und CH₃ Gruppen zu unterscheiden.

Die für die sec-Butyl-Gruppe (-CH(-CH₃)-CH₂-CH₃) charakteristische CH-Gruppe ergibt ein Signal bei 33,7 ppm (mit einer ¹Jpc-Kopplung von 91 Hz) ¹Jpc-Kopplung ist definiert als die Kopplung des Phosphorkernes über eine kovalente Bindung zum nächsten Kohlenstoffkern.Tabelle 9: ³¹P-NMR-Chemische Verschiebung (chemical shift) von Telomeren

| Dialkylphosphinsäure-Aluminiumsalz | ³¹P-NMR, chemische Verschiebung [ppm] |
|---|---|
| Aluminiumtris(diethylphosphinat) | 50,435 - 49,785 |
| Aluminiumtris(i-butylethylphosphinat) | 51,830 - 51,752 |
| Aluminiumtris(n-butylethylphosphinat) | 49,031 - 48,866 |
| Aluminiumtris(n-hexylethylphosphinat) | 48,693 - 48,693 |
| Aluminiumtris(sec-hexylethylphosphinat) | ca. 51,72 |
| Aluminiumtris(di-n-butylphosphinat) | 47,696 - 47,622 |
| Aluminiumtris(di-sec-butylphosphinat) | 52,861 - 52,861 |
| Aluminiumtris(n-octylethylphosphinat) | 46,795 - 46,795 |

### Beispiel 1

Ein Aluminiumdiethylphosphinat, das Telomere als Zusatz enthält wird hergestellt, in dem 2,2 kg (20,7 Mol) Natriumhypophosphit-1-hydrat in 8 kg (7,62 l) Essigsäure gelöst und in einem 16-l-Doppelmantel-Druckreaktor aus Stahl-Emaille vorgelegt. Nach Aufheizen der Reaktionsmischung auf 85 °C wurde über ein auf 7 bar eingestelltes Reduzierventil Ethylen bis zur Sättigung in den Reaktor eingeleitet. Die Reaktion wurde unter ständigem Rühren durch Zudosieren einer Lösung von 56 g (1 Mol-%) 2,2'-Azobis(2-amidinopropan)dihydrochlorid in 250 ml Wasser gestartet und über die Radikalstarter-Dosier-Geschwindigkeit so gesteuert, dass die Reaktionstemperatur im Reaktor bei einer Manteltemperatur von 80 °C unter ständiger Zufuhr von Ethylen bei einem mittleren Druck von etwa 7 bar nicht über 95 °C stieg. Die Dosierzeit betrug insgesamt 3 Stunden. Danach ließ man noch 3 h bei 85 °C nachreagieren. Der Reaktor wurde entspannt und auf Raumtemperatur abgekühlt.

Die erhaltene Lösung wurde am Rotationsverdampfer weitestgehend vom Lösungsmittel Essigsäure befreit und anschließend mit 15,9 l Wasser versetzt.

Innerhalb von drei Stunden wurden 4333 g (6,9 mol Al) einer wässrigen Aluminiumsulfatlösung mit 4,3 Gew.-% Al-Gehalt zugefügt. Anschließend wurde der erhaltene Feststoff abfiltriert, nacheinander 2 mal mit je 2 l Wasser gewaschen und bei 130 °C im Vakuum getrocknet.

Das Produkt enthält 15,9 Gew.-% Aluminiumbutylethylphosphinat und 0,2 Gew.-% Restfeuchte.

### Beispiel 2

Entsprechend Beispiel 1 wird mit 3 bar Ethylendruck und 95,2 g Natriumperoxodisulfat gearbeitet. Das Produkt enthält 5,8 Gew.-% Aluminiumethylphosphonat.

### Beispiel 3

800 g einer Lösung, die wie in Beispiel 1 erhalten wurde, wird nach dem Entspannen und Abkühlen mit 2500 ml Essigsäure verdünnt und anschließend 42 g (0,54 Mol) Aluminium-hydroxid zugegeben. Dann wurde für etwa 4 Stunden unter Rückfluss erhitzt, abgekühlt und abfiltriert. Der erhaltene Feststoff wurde mit 1 Liter Eisessig gewaschen und dann bei 130 °C im Vakuum getrocknet. Das Produkt enthält 5,8 Gew.-% Aluminiumacetat.

### Beispiel 4 (Vergleich)

Aluminiumdiethylphosphinat und Aluminiumphosphit (Mengen in Tabelle 1) werden in eine Polyethylenflasche so eingewogen, dass sich ca. 1 kg Flammschutzmischung ergibt. In einem Überkopfmischer wird die Mischung ca. 2 Stunden gemischt, bis Homogenität erreicht ist.

### Beispiele 16 bis 24

Aluminiumdiethylphosphinat, das einen Zusatz aus Sulfat enthält, wird mit Aluminiumphosphit in eine Polyethylenflasche so eingewogen, dass sich ca. 1 kg Flammschutzmischung ergibt und diese in einem Überkopfmischer ca. 2 Stunden gemischt, bis Homogenität erreicht ist. Versuche zeigen eine gleichmäßigere Rieselfähigkeit bei den Produkten der Beispiele 16 bis 24 als beim Produkt ohne Zusätze aus dem Vergleichsbeispiel 4.

### Beispiel 70

Gemäß der allgemeinen Vorschrift wird eine Mischung von 50 Gew.-% Polyamid 6.6, 20 Gew.-% halogenfreie Flammschutzmittelmischung aus Beispiel 12 und 30 Gew.-% Glasfasern zu einer flammgeschützten Polymerformmasse verarbeitet. Nach Trocknung werden die Formmassen auf einer Spritzgießmaschine zu Polymerformkörper verarbeitet. Es wurde eine UL-94 Klassifizierung von V-0 bestimmt.

### Beispiele 71 bis 77

Nach Beispiel 70 werden flammgeschützten Polymerformmassen auf Basis von Polyamid 6, Polyamid 4.6 und Polybutylenterephthalat verarbeitet. Nach Trocknung werden die Formmassen auf einer Spritzgießmaschine zu Polymerformkörper verarbeitet. Es wurde eine UL-94 Klassifizierung von V-0 bestimmt.

**Tabelle 2: Flammschutzmittelmischungen aus Diethylphosphinsäuresalz, Sulfat und Aluminiumphosphit**

| Beispiel | 16 | 17 | 18 | 19 | 20 | 21 | 22 | 23 | 24 |
|---|---|---|---|---|---|---|---|---|---|
| Diethylphosphinsäuresalz [Gew.%] | 99 | 99 | 1 | 90 | 90 | 10 | 80 | 80 | 50 |
| Zusatz | Natriumsulfat Na₂SO₄ | Natriumsulfat Na₂SO₄ | Natriumsulfat Na₂SO₄ | Natriumsulfat Na₂SO₄ | Natriumalunit NaAl₃(SO₄)₂ (OH)₆ | Basaluminit Al₄(OH)₁₀SO₄ *5H₂O | Natriumsulfat Na₂SO₄ | Natriumalunit NaAl₃(SO₄)₂ (OH)₆ | Basaluminit Al₄(OH)₁₀SO₄ *5H₂O |
| dito, Menge [Gew.-%] | 7,4 | | | 7,4 | | | 7,4 | | |
| dito, Menge [ppm] | | 13308 | 74 | | 7874 | 242 | | 7874 | 242 |
| Aluminiumphosphit | basisches AluminiumPhosphit Al(OH)(H₂PO₃)₂ *2H₂O | sekundäres AluminiumPhosphit Al₂(HPO₃)₃ | Al₂(HPO₃)₃ *4H₂O | sekundäres AluminiumPhosphit Al₂(HPO₃)₃ | Mischung von Al₂(HPO₃)₃* 4H₂O mit schwerlöslichen Aluminiumsalzen und stickstofffreien Fremdionen | Aluminiumhydrogenphosphite und AluminiumSalze | sekundäres AluminiumPhosphit Al₂(HPO₃)₃ | Alkali-Aluminium-Mischphosphite | Aluminiumhydrogenphosphite |
| dito, Menge [Gew.-%] | 1 | 1 | 99 | 10 | 10 | 90 | 20 | 20 | 50 |

| Kenngrößen nach Pfrengle | | | | | | | | | |
|---|---|---|---|---|---|---|---|---|---|
| Spanne des Verhältnisses Radius/Höhe (=cot alpha) | 0,5 | 0,42 | 0,5 | 0,5 | 0,42 | 0,56 | 0,48 | 0,42 | 0,5 |
| Spanne der Schüttkegelhöhe [mm] | 13 | 10 | 13 | 13 | 10 | 15 | 12 | 10 | 13 |

**Tabelle 8: Zusammensetzung flammgeschützter polymerer Formmassen und Flammschutztests von flammgeschützten polymeren Formkörpern nach UL 94**

| | | | | | | | | | |
|---|---|---|---|---|---|---|---|---|---|
| Beispiel | | | | 72 | | | | | |
| Polyamid 6.6 | [Gew.-%] | | | | | | | | |
| Polyamid 6 | [Gew.-%] | | | 50 | | | | | |
| Polyamid 4.6 | [Gew.-%] | | | | | | | | |
| Polybutylenterephthalat | [Gew.-%] | | | | | | | | |
| Glasfasern PA | [Gew.-%] | | | 30 | | | | | |
| Glasfasern PA 46 | [Gew.-%] | | | | | | | | |
| Glasfasern PBT | [Gew.-%] | | | | | | | | |
| | | | | | | | | | |
| Flammschutzmittel nach Beispiel 23 | [Gew.-%] | | | 20 | | | | | |
| | | | | | | | | | |
| | | | | | | | | | |
| | | | | | | | | | |
| | | | | | | | | | |
| | | | | | | | | | |
| | | | | | | | | | |
| UL 94 0,8mm | [-] | | | V-0 | | | | | |

Polybutylenterephthalat: Celanex® 2500, Fa. Ticona
Polyamid 6.6: Ultramid® A3, Fa. BASF
Polyamid 6: Zytel® 7301, Fa. Du Pont
Polyamid 4.6: Stanyl® PA 46, Fa. DSM
Glasfasern PBT: Vetrotex® EC 10 983, Fa. Saint-Gobain
Glasfasern PA: PPG 3540, Fa. PPG Industries, Inc
Glasfasern PA 46: Vetrotex® 995, Fa. Saint-Gobain

### Beispiel 78

3 Mol Na₂HPO₃-Lösung und 2 Mol Al₂(SO₄)₃ -Lösung werden in wässriger Lösung bei 150 °C und pH = 6,1 während 3 h zur Kristallisation gebracht, abfiltriert und an der Luft getrocknet. Das Natriumaluminiumphosphit wird röntgenpulverdiffraktometrisch untersucht. Die Stöchiometrie ist Al_{2,0}Na_{0,6}(HPO₃)_{2,89}*0,28H₂O

### Beispiel 78:

Röntgenpulverdaten von Natriumaluminiumphosphit

| Winkel [°2Th] | Reflexhöhe [cts] |
|---|---|
| 9,7557 | 297,79 |
| 12,6394 | 253,3 |
| 16,3439 | 2427,07 |
| 16,6964 | 1030,74 |
| 17,3912 | 580,89 |
| 18,7844 | 603,35 |
| 19,3678 | 650,66 |
| 23,7489 | 875,42 |
| 26,5675 | 1631,28 |
| 26,9505 | 966,58 |
| 27,2826 | 1227,78 |
| 30,3357 | 943,17 |
| 30,8885 | 769,05 |
| 31,9389 | 660,8 |
| 33,1695 | 1875,34 |
| 33,7547 | 556,79 |
| 34,1478 | 956,04 |

### Beispiel 79

3 Mol Na₂HPO₃-Lösung und 2 Mol Al₂(SO₄)₃ -Lösung werden in wässriger Lösung bei 150 °C und pH = 3,5 während 3 h zur Kristallisation gebracht, abfiltriert und an der Luft getrocknet.

### Beispiel 80

3 Mol Na₂HPO₃-Lösung und 2 Mol Al₂(SO₄)₃-Lösung werden in wässriger Lösung bei 150 °C und pH = 3,5 während 3 h zur Kristallisation gebracht, abfiltriert und an der Luft getrocknet.

### Beispiel 81

3 Mol Na₂HPO₃-Lösung und 2,01 Mol Al₂(SO₄)₃-Lösung werden in wässriger Lösung bei 150 °C und pH = 2,5 während 3 h zur Kristallisation gebracht, abfiltriert und an der Luft getrocknet.

### Beispiel 82

3 Mol Na₂HPO₃-Lösung und 2,1 Mol Al₂(SO₄)₃-Lösung werden in wässriger Lösung bei 150 °C und pH = 1 während 6 h zur Kristallisation gebracht, abfiltriert und an der Luft getrocknet.

### Beispiel 82:

Röntgenpulverdaten von Al₂(HPO₃)₃*4H₂O

| Winkel [°2Th] | Höhe [cts] |
|---|---|
| 11,7777 | 345,54 |
| 13,6143 | 1270,15 |
| 14,7988 | 993,31 |
| 15,3862 | 494,47 |
| 16,2983 | 596,21 |
| 20,2051 | 1455,68 |
| 22,5312 | 1405,43 |
| 32,9021 | 1440,39 |

### Beispiele 78 bis 82:

Röntgenpulverdaten von Mischungen von Al₂(HPO₃)₃*4H₂O und Natriumaluminiumphosphit

| Beispiel | Höhe des Reflexes bei 9,7557°2Th | Natrium-AluminiumPhosphit-Gehalt | Natrium-Gehalt |
|---|---|---|---|
| | [cts] | [Gew.-%] | [Gew.-%] |
| 78 | 297,79 | 100,0 | 4,1 |
| 79 | 152,76 | 51,3 | 2,1 |
| 80 | 44,67 | 15,0 | 0,6 |
| 81 | 14,89 | 5,0 | 0,2 |
| 82 (Vgl.) | 0 | 0,0 | 0,0 |

## Patentansprüche

1. Halogenfreie Flammschutzmittelmischung, enthaltend 1 bis 99 Gew.-% einer Komponente A und 1 bis 99 Gew.-% einer Komponente B, wobei Komponente A 92 bis 99,9 Gew.-% eines festen Aluminiumdiethylphosphinsäuresalz und 0,5 bis 8 Gew.-% nicht-brennbare Zusätze enthält wobei es sich bei den Zusätzen um Sulfate handelt, und dass es sich bei den Sulfaten um Verbindungen mit Kationen der Alkalimetalle, der Erdalkalimetalle, der dritten Hauptgruppe, der Nebengruppen des Periodensystems und/oder von protonierten Stickstoffbasen handelt; und es sich bei der Komponente B um Aluminiumphosphit handelt, wobei es sich bei den bei den Aluminiumphosphiten um solche der Formeln (I), (II) und/oder (III)
Al₂(HPO₃)₃ x (H₂O)_{q} (I)
in der
q 0 bis 4
bedeutet,
Al_{2,00}M_{z}(HPO₃)_{y}(OH)ᵥ x (H₂O)_{w} (II)
in der
M Alkalimetallionen
z 0,01 bis 1,5
y 2,63 bis 3,5
v 0 bis 2 und
w 0 bis 4
bedeutet,
Al_{2,00}(HPO₃)ᵤ(H₂PO₃)ₜ x (H₂O)ₛ (III)
in der
u 2 bis 2,99
t 2 bis 0,01 und
s 0 bis 4
bedeutet,
und/oder um Mischungen von Aluminiumphosphit der Formel (I) mit schwerlöslichen Aluminiumsalzen und stickstofffreien Fremdionen, um Mischungen von Aluminiumphosphit der Formel (III) mit Aluminiumsalzen, um Aluminiumphosphit [Al(H2PO₃)₃], um sekundäres Aluminiumphosphit [Al₂(HPO₃)₃], um basisches Aluminiumphosphit [Al(OH)(H₂PO₃)₂*2aq], um Aluminiumphosphittetrahydrat [Al₂(HPO₃)₃*4aq], um Aluminiumphosphonat, um Al₇(HPO₃)₉(OH)₆(1,6-Hexandiamin)_{1,5}*12H₂O, um Al₂(HPO₃)³*xAl₂O₃*nH₂O mit x = 2,27 - 1, um Al₄H₆P₁₆O₁₈ und/oder um Mischungen von 0 - 99,9 Gew.-% Al₂(HPO₃)₃*nH₂O mit 0,1 - 100 Gew.-% Natriumaluminiumphosphit handelt.

2. Halogenfreie Flammschutzmittelmischung nach Anspruch 1, enthaltend 20 bis 80 Gew. % der Komponente A und 20 bis 80 Gew.-% der Komponente B.

3. Halogenfreie Flammschutzmittelmischung nach Anspruch 1 oder 2, **dadurch gekennzeichnet, dass** es sich bei den Sulfaten um Natriumsulfate, Natriumaluminiumsulfate, Alunite, Aluminumsulfate, Calciumsulfat, Cersulfate, Eisensulfate, Kaliumhydrogensulfate, Kaliumsulfat, Magnesiumsulfate, Mangansulfate, Monolithiumsulfat, Titansulfate, Zinksulfat, Zinnsulfate, Zirconiumsulfate und/oder ihre Hydrate handelt.

4. Halogenfreie Flammschutzmittelmischung nach einem oder mehreren der Ansprüche 1 bis 3, **dadurch gekennzeichnet, dass** es sich bei den Aluminiumphosphit um eine Mischung von 50 - 99 Gew.-% Al₂(HPO₃)₃ x (H₂O)_{q} in der q 0 bis 4 bedeutet und 1 - 50 Gew.-% Natriumaluminiumphosphit handelt.

5. Halogenfreie Flammschutzmittelmischung nach einem oder mehreren der Ansprüche 1 bis 4, **dadurch gekennzeichnet, dass** es sich bei den Aluminiumphosphit um eine Mischung von 50 - 99 Gew.-% Al₂(HPO₃)₃ x (H₂O)_{q} in der q 0 bis 4 bedeutet und 1 - 50 Gew.-% Al_{2,00}M_{z}(HPO₃)_{y}(OH)ᵥ x (H₂O)_{w} (II) in der M Natrium, z 0,005 bis 0,15, y 2,8 bis 3,1, v 0 bis 0,4 und w 0 bis 4 bedeutet, handelt.

6. Halogenfreie Flammschutzmittelmischung nach einem oder mehreren der Ansprüche 1 bis 5, **dadurch gekennzeichnet, dass** die Komponente A eine mittlere Teilchengröße d50 von 0,05 bis 10µm und die Komponente B eine mittlere Teilchengröße d50 von 0,05 bis 10µm sowie eine Restfeuchte von 0,05 bis 8 Gew.-% aufweist.

7. Verfahren zur Herstellung einer Flammschutzmittelmischung nach einem oder mehreren der Ansprüche 1 bis 6, **dadurch gekennzeichnet, dass** man die Komponenten A und B jeweils in Pulverform miteinander mischt und gegebenenfalls siebt.

8. Verwendung einer halogenfreien Flammschutzmittelmischung nach einem oder mehreren der Ansprüche 1 bis 7 als Zwischenprodukt für weitere Synthesen, als Synergist, als Binder, als Vernetzer bzw. Beschleuniger beim Aushärten von Epoxyharzen, Polyurethanen, ungesättigten Polyesterharzen, als Polymerstabilisatoren, als Pflanzenschutzmittel, als Sequestrierungsmittel, als Mineralöl-Additiv, als Korrosionsschutzmittel, in Wasch- und Reinigungsmittelanwendungen, in Elektronikanwendungen, in oder als Flammschutzmittel, als Flammschutzmittel für Klarlacke und Intumeszenzbeschichtungen, in oder als Flammschutzmittel für Holz und andere cellulosehaltige Produkte, in oder als reaktive und/oder nicht reaktive Flammschutzmittel für Polymere, zur Herstellung von flammgeschützten Polymerformmassen, zur Herstellung von flammgeschützten Polymerformkörpern und/oder zum flammhemmend Ausrüsten von Polyester und Cellulose-Rein- und Mischgeweben durch Imprägnierung und/oder als Synergist in weiteren Flammschutzmittel-Mischungen.

9. Flammgeschützte thermoplastische oder duroplastische Polymerformmasse, Polymer-Formkörper, -Filme, -Fäden und/oder -Fasern, enthaltend 0,1 bis 45 Gew.-% halogenfreie Flammschutzmittelmischung nach einem oder mehreren der Ansprüche 1 bis 6, 55 bis 99,9 Gew.-% thermoplastisches oder duroplastisches Polymer oder Mischungen derselben, 0 bis 55 Gew.-% Additive und 0 bis 55 Gew.-% Füllstoff bzw. Verstärkungsmaterialien, wobei die Summe der Komponenten 100 Gew.-% beträgt.

10. Flammgeschützte thermoplastische oder duroplastische Polymerformmasse, Polymer-Formkörper, -Filme, -Fäden und/oder -Fasern, enthaltend 1 bis 30 Gew.-% halogenfreie Flammschutzmittelmischung nach einem oder mehreren der Ansprüche 1 bis 6, 10 bis 97 Gew.-% thermoplastisches oder duroplastisches Polymer oder Mischungen derselben, 1 bis 30 Gew.-% Additive und 1 bis 30 Gew.-% Füllstoff bzw. Verstärkungsmaterialien, wobei die Summe der Komponenten 100 Gew.-% beträgt.

11. Flammgeschützte thermoplastische oder duroplastische Polymerformmasse, Polymer-Formkörper, -Filme, -Fäden und/oder -Fasern, enthaltend eine halogenfreie Flammschutzmittelmischung nach einem oder mehreren der Ansprüche 1 bis 6, **dadurch gekennzeichnet, dass** es sich bei dem Polymer um thermoplastische Polymere der Art Polystyrol-HI (High-Impact), Polyphenylenether, Polyamide, Polyester, Polycarbonate und Blends oder Polymerblends vom Typ ABS (Acrylnitril-Butadien-Styrol) oder PC/ABS (Polycarbonat/ Acrylnitril-Butadien-Styrol) oder PPE/HIPS (Polyphenylenether/Polystyrol-HI) Kunststoffe und/oder um duroplastische Polymere der Art ungesättigter Polyester oder Epoxidharze handelt.

12. Flammgeschützte thermoplastische oder duroplastische Polymerformmasse, Polymer-Formkörper, -Filme, -Fäden und/oder -Fasern nach einem oder mehreren der Ansprüche 9 bis 11, **dadurch gekennzeichnet, dass** es sich bei dem Polymer um Polyamid 4/6 (Poly(tetramethylen-adipamid), Poly-(tetramethylen-adipinsäurediamid), um Polyamid 6 (Polycaprolactam, Poly-6-aminohexansäure), um Polyamid 6/6 ((Poly(N,N'-hexamethyleneadipinediamid) und/oder um HTN (Hochtemperatur-Nylon).
